# EUROPEAN PATENT SPECIFICATION

(11) **EP 4 112 163 B1**
(45) Date of publication and mention of the grant of the patent: **18.11.2026**
(21) Application number: 21760072.5
(22) Date of filing: 25.02.2021
(51) Int. Cl.: B01J 23/78, B01J 23/75, B01J 23/00, B01J 35/45, B01J 35/61, B01J 35/63, B01J 35/64, B01J 37/03, B01J 37/06, B01D 53/86, C01G 51/00, C01G 51/04

(54) **MATERIAL FOR N2O DECOMPOSITION**
MATERIAL ZUR ZERSETZUNG VON N2O
MATÉRIAU POUR LA DÉCOMPOSITION DE N2O

(30) Priority: 27.02.2020 ES 202030167
(43) Date of publication of application: 04.01.2023
(73) Proprietor: Consejo Superior de Investigaciones Científicas (CSIC), 28006 Madrid (ES)
(72) Inventor: SERRANO LOTINA, Ana, 28049 Madrid (ES); ALVAREZ GALVÁN, Maria Consuelo, 28049 Madrid (ES); ÁVILA GARCÍA, Pedro, 28049 Madrid (ES); PÉREZ FERRERAS, Susana, 28049 Madrid (ES)
(74) Representative: M. Zardi & Co S.A.
(86) International application number: PCT/ES2021/070138
(87) International publication number: WO 2021/170893

(56) References cited:
- JP-A- 2007 054 714
- JP-A- 2012 050 969
- KIM MIN-JAE ET AL: "Understanding the Effect of NO Adsorption on Potassium-Promoted Co3O4for N2O Decomposition", CATALYSIS LETTERS, J.C. BALTZER, NEW YORK, vol. 147, no. 11, 8 September 2017 (2017-09-08), pages 2886 - 2892, XP036334733, ISSN: 1011-372X, [retrieved on 20170908], DOI: 10.1007/S10562-017-2180-8
- WOJCIK, SYLWIA ET AL.: "Bulk, surface and interface promotion of Co3O4 for the low-temperature N20 decomposition catalysis", CATALYSTS, vol. 10, no. 41, 30 December 2019 (2019-12-30), pages 1 - 15, XP055849917
- ASANO ET AL.: "Potassium-doped Co3O4 catalyst for direct decomposition of N2O", APPLIED CATALYSIS B: ENVIRONMENTAL, vol. 78, no. 3-4, 21 December 2007 (2007-12-21), pages 242 - 249, XP022398478, DOI: 10.1016/j.apcatb. 2007.09.01 6
- STELMACHOWSKI P ET AL.: "Strong electronic promotion of Co3O4 towards N2O decomposition by surface alkali dopants", CATALYSIS COMMUNICATIONS, vol. 10, no. 7, 10 March 2009 (2009-03-10), pages 1062 - 1065, XP025988649, DOI: 10.1016/j.catcom. 2008.12.05 7
- PASHA N ET AL.: "Studies on cesium doped cobalt oxide catalysts for direct N2O decomposition in the presence of oxygen and steam", CATALYSIS COMMUNICATIONS, vol. 10, no. 2, 15 November 2008 (2008-11-15), pages 132 - 136, XP025572243, DOI: 10.1016/j.catcom. 2008.06.00 6
- ZASADA F ET AL.: "Potassium promotion of cobalt spinel catalyst for N2O decomposition-accounted by work function measurements and DFT modelling", CATALYSIS LETTERS JANUARY, vol. 127, no. 1-2, 31 December 2008 (2008-12-31), pages 126 - 131, XP019640354, DOI: 10.1007/s10562-008-9655-6

## Description

The present invention relates to a catalyst with a non-stoichiometric spinel-type crystalline structure, the production process for obtaining it via precipitation with controlled washing, and its particular use in the N₂O decomposition reaction. Therefore, we understand that the present invention is in the area of green industry aimed at reducing N₂O emissions.

### BACKGROUND TO THE INVENTION

Nitrous oxide is a greenhouse gas with a potential 298 higher than CO₂ and with a devastating effect on the ozone layer, with a lifetime in the troposphere of 100 years. The industrial sector generates 5% of total N₂O emissions and it is estimated that this is the sector that is likely to experience the largest increase in emissions in the very near future. Within the industrial sector, nitric acid and adipic acid production are the main sources of N₂O emissions. Since the number of plants is limited, emission reductions could be easier to achieve compared to other sectors that have many diffuse sources, such as biomass burning or agriculture. Measures have already been established for a large number of the adipic acid plants, but emissions in nitric acid plants are particularly difficult to reduce.

The most effective technologies for nitrous oxide removal in nitric acid plants are catalytic decomposition processes carried out after the ammonia oxidation stage (secondary treatment) or its removal in the tail gas stream (tertiary treatment). There are several commercial catalysts available for secondary treatment, but they have some disadvantages, such as deactivation, low wear resistance or sintering of the active phase due to the high temperatures they have to withstand (between 750 °C and 940 °C).

The tertiary treatment offers the great advantage of not affecting the heart of the nitric acid plant since it is implemented as a tail gas treatment. The main technological problem is to develop catalytic systems that are active at relatively low temperatures (between 250 °C and 500 °C) and capable of operating under real process conditions, since there are other components present in the tail gas (O₂, H₂O and possibly NOₓ) that can significantly alter the efficiency of the catalyst.

Catalysts considered to be active in the decomposition reaction of N₂O at lowtemperature are zeolites modified with various metals (Cr, Mn, Fe, Co, Ni o Cu), noble metals (Rh, Ru, Pd) supported on ZnO, CeO₂, Al₂O₃, TiO₂ o ZrO₂, hydrotalcite derivatives, spinels and metal oxides [M. Konsolakis, ACS Catal. 2015, 5, 6397-6421; J. Pérez-Ramírez, Appl. Catal. B 44 (2003) 117-151]. Among them, those that have shown the best catalytic activities and the best resistance to O₂ and H₂O are based on cobalt spinel. Yan et al [L. Yan, R. Ren, X. Wang, Q. Gao, D. Ji, J. Suo, Catal. Comm. 4 (2003) 505-509;
L. Yan, R. Ren, X. Wang, D. Ji, J. Suo, Appl. Catal. B 45 (2003) 85-90] published studies with the formulations ZnxCo₁₋ₓCo₂O₄ and MxCo₁₋ₓCo₂O₄ (M= Ni, Mg) where T₅₀ (temperature required for 50 % conversion of N₂O) were recorded respectively at 250 and 220 °C. The operating conditions used were GHSV (gas hourly space velocity) of 15000 h⁻¹ and N₂O concentrations of 1000 ppm, with 10% O₂ and 5% H₂O. Similar results (T₅₀ = 260°C) were obtained by Xu et al. [L. Xue, C. Zhang, H. He, Y. Teraoka, Appl. Catal. B 75 (2007) 167-174] with its CoCe_{0.05} catalyst also working at a space velocity of 15000 h⁻¹ and concentrations of 1000 ppm of N₂O, 10% of O₂ and 3% of H₂O.

The addition of alkaline elements enhances the catalytic activity of cobalt spinel Co₃O₄ [JP2007054714 (A)]. Stelmachowski et al [P. Stelmachowski, G. Maniak, A. Kotarba, Z. Sojka, Catal. Comm. 10 (2009) 1062-1065] reported conversions of 50% at 335°C using K-doped cobalt spinels working at 7000 h⁻¹ and N₂O concentrations of 1500 ppm and 1% de H₂O, and Xue et al, 77% at 350°C [Li Xue, Changbin Zhang, Hong He, Yasutake Teraoka, Applied Catalysis B: Environmental, Volume 75, Issues 3-4, 2007, Pages 167-174]. In these studies, the presence of O₂ and H₂O has been taken into account (even in higher concentrations than the actual ones), but the space velocities tested are nevertheless much lower than those used industrially. In addition, no stability tests were performed except in the case of the Co₃O₄ catalyst promoted with K, where the catalyst was only evaluated for 10 h. Other authors have also described the behaviour of catalysts doped with other alkalis, such as Cs, with doping obtained by impregnation method. The addition of water in the feed, present in actual operating conditions, leads to a decrease in N₂O conversion using these catalysts [Pawel Stelmachowski, Gabriela Maniak, Andrzej Kotarba, Zbigniew Sojka, Catalysis Communications, Volume 10, Issue 7, 2009, Pages 1062-1065].

Min-Jae Kim et al. "Understanding the Effect of NO Adsorption on Potassium-Promoted Co3O4 for N2O Decomposition", CATALYSIS LETTERS, J.C. BALTZER, NEW YORK, vol. 147, no. 11, pages 2886-2892, discloses tests performed on Co₃O₄ and K/Co₃O₄ in catalytic N₂O decomposition.

Therefore, there is a need to provide catalysts that report more than 90% conversion at temperatures below 350°C under real conditions, and to provide catalysts that are stable under these conditions.

### DESCRIPTION OF THE INVENTION

The present invention concerns a new material with the formula Co₃O_{4-x/2}A_{y}, its preparation process and its use as a catalyst in the decomposition reaction of N₂O.

In a first aspect the present invention relates to a material characterised in that it has a non-stoichiometric spinel-type crystalline structure, the general formula of which is "Co₃O_{4-x/2}A_{y}", where "x" has a value of between 0.02 and 0.3, "A" is an alkaline element and "y" has a value of between 0.06 and 0.18, with an A/Co ratio of between 0.02 and 0.06; the primary particle size - determined by Scanning Electron Microscopy - being equivalent to a crystallite size of between 5 and 30 nm.

In the present invention "non-stoichiometric spinel" is understood as any material having cubic structure of spinel-type cobalt oxide that is partially reduced, which generates oxygen vacancies, with the general formula Co₃O_{4-x/2}A_{y}, since there is a reduction of Co³⁺ to Co²⁺ induced by the presence of the alkali element.

The advantage associated with these catalysts is that they show surface desorption of oxygen at temperatures around 100°C and lattice desorption of oxygen at temperatures between 200 and 300 °C because the Co²⁺/Co³⁺ ratio in the catalyst is between 0.55 and 0.80.

The material is preferably mesoporous. In the present invention, "mesoporous material" means any material having pores with a predominant pore size between 2 nm and 50 nm.

The advantage of the material being mesoporous is the accessibility of gases to the catalytically active centres, based on an ideal ratio of pore volume to specific surface area. In a preferred embodiment, the material has a pore volume - determined by N₂ adsorption-desorption isotherms - of between 0.2 cm³/g and 0.4 cm³/g and a specific surface area BET of between 40 m²/g and 80 m²/g, relatively high for a bulk material, resulting in a high gas-solid contact surface area which favours catalytic activity.

In another preferred embodiment, the alkali element A is K, x is 0.182, and y is 0.09

In another preferred embodiment the alkali element A is Cs, x is 0.235, and y is 0.15

Another aspect of the invention is a process for obtaining a Co₃O_{4-x/2}A_{y} material with a non-stoichiometric spinel structure characterised by the following steps:
a) dissolving a cobalt salt in water;
b) dissolving a salt or hydroxide of an alkali metal in water;
c) slowly adding the solution obtained in step (b) to the solution prepared in step (a) until a pH of between 8 and 11 is reached;
d) filtering the solid obtained in step (c) and washing it with 5 ml to 75 ml of water for each gram of cobalt salt added in step (a);
e) drying the solid obtained in step (d) at a temperature between 50 °C and 200 °C for a time between 12 h and 20 h; and
f) calcining the solid obtained in step (e) at a temperature between 200 °C and 700 °C in an air atmosphere for at least 30 min.

The washing in stage (d) is carried out in a controlled manner and is critical, since the content of A in the sample depends on it, and this directly influences the reduction temperature of Co(III) to Co (II) and, therefore, the Co²⁺/Co³⁺ ratio obtained, thus controlling, depending on the amount of water used in relation to the initial Co salt content in the reaction, the amount of alkali to be introduced into the crystal lattice of the material of the present invention. Furthermore, this controlled washing avoids an additional stage in which the alkali metal is added, making the procedure of the present invention simpler than those described in the prior art.

According to the process described in the present invention, a non-stoichiometric cobalt spinel precipitation of cobalt oxide is produced, doped with an alkali metal in such a way that an intimate contact between the Co and the alkali ion is created from the stage of precipitate formation. The doping is of the bulk-type doping, with a distribution of the alkali element throughout the whole not just on the surface.

This synthesis process directly affects the cobalt spinel-formation process, generating a material with a primary particle size equivalent to the size of crystallite or crystalline domain, as revealed by X-ray diffraction and scanning electron microscopy. A small primary particle size of the cobalt spinel results in a high exposed specific surface area, leading to a high ratio of active centres per gram of catalyst, contributing to the improvement of catalyst efficiency.

In addition, the inclusion of the alkali ion by this process significantly alters the chemical-physical properties of the material, as it causes a partial reduction of Co(III) ions to Co(II). This changes the stoichiometry of the resulting spinel, decreasing the proportion of oxygen in the lattice, which leads to a distortion of the structure and gives it distinctly different catalytic properties than the conventional spinel.

In another preferred embodiment of the process, the cobalt salt in step (a) is selected from cobalt nitrate hexahydrate, cobalt sulphate, cobalt chloride and cobalt acetate.

In another preferred embodiment of the process the alkali metal salt or hydroxide of step (b) is selected from an alkali metal carbonate, alkali metal nitrate, alkali metal hydroxide and alkali metal acetate. In a more preferred embodiment, the alkali metal salt or hydroxide is alkali metal carbonate.

In another preferred embodiment of the process, if the cobalt salt is cobalt nitrate hexahydrate and the alkali metal salt is alkali metal carbonate, the washing of step (d) is with an amount of water between 16 ml/g and 21 ml/g of cobalt nitrate hexahydrate.

A third aspect of the present invention relates to the use of the material described above as a catalyst.

In a more preferred embodiment it refers to the use of the material as a catalyst in the oxidation/decomposition of gases.

In a still more preferred embodiment it refers to the use of the material as a catalyst for N₂O decomposition.

The catalysts show a N₂O conversion of 98 % under real operating conditions from 340 °C at a GHSV of 50,330 h⁻¹.

The catalysts show a N₂O conversion of 98 % under real operating conditions from 310 °C at a GHSV of 24,000 h⁻¹.

Furthermore, it shows a high stability in the presence of H₂O and O₂ of at least 65 h without a decrease in the conversion of N₂O and without altering determining properties such as particle size or porosity.

Throughout the description and claims the word "comprises" and its variants are not intended to exclude other technical features, additives, components or steps. Other objects, advantages and features of the invention will be apparent to those skilled in the art in part from the description and in part from the practice of the invention. The following examples and figures are provided by way of illustration, and are not intended to be limiting of the present invention.

### BRIEF DESCRIPTION OF THE FIGURES

**Fig. 1** X-ray diffractograms of the materials of the invention.
**Fig. 2** Scanning electron microscopy images of the materials of the invention.
**Fig. 3** Pore size distribution of the materials of the invention obtained by adsorption-desorption isotherms of N₂.
**Fig. 4** XPS diagrams of the materials of the invention.
**Fig. 5** Programmed temperature reduction with H₂ of the materials of the invention.
**Fig. 6** Desorption of O₂ at programmed temperature of the materials of the invention.
**Fig. 7** Conversion of N₂O as a function of space time in the presence of O₂ and H₂O vapour of the materials of the invention and of materials reported in the state of the art.

### EXAMPLES

The invention is illustrated below by means of the results of tests carried out by the inventors which demonstrate the effectiveness of the product of the invention.

### Example 1

14.84 grams of cobalt nitrate (Co(NO₃)₂.6H₂O) were dissolved in 100 ml of water and the solution was kept under stirring. 100 ml of a solution of potassium carbonate (K₂CO₃) 15% w/w was prepared, placed in a burette and slowly added to the cobalt nitrate solution. The addition of carbonate was continued until the pH reached was 9. The solid was filtered off and washed with 250 ml of water at 15°C. It was dried at 100 °C for 16 h and calcined at 400 °C for 2 h, to obtain a catalyst with the formula Co₃O_{3.88}K_{0.08}.

### Example 2

When a sample of the material obtained according to example 1 was introduced into a tubular reactor and a gas stream of Ar with an N₂O concentration of 1400 ppm, was fed at a ratio (Gas flow rate : catalyst volume) GHSV = 50,300 h⁻¹, gradual heating of the gases inside the reactor resulted in a progressive decrease of the N₂O concentration at the reactor outlet equivalent to N₂O conversion values of 73 % at 260°C, 95 % at 280°C and 98 % at temperatures above 310 °C.

When a sample of this material was introduced into a tubular reactor and a gas stream of Ar with an N₂O concentration equal to 1400 ppm and O₂ = 3% v/v was fed at a ratio (total gas flow rate : catalyst volume) GHSV = 50,300 h⁻¹, gradual heating of the gases inside the reactor resulted in a progressive decrease of the N₂O concentration at the reactor outlet, equivalent to N₂O conversion values of 17 % at 250 °C, 88 % at 300 °C and 96 % at temperatures above 350 °C.

When a sample of this material was introduced into a tubular reactor and a gas stream of Ar with an N₂O concentration equal to 1400 ppm and [H₂O] = 0.5% v/v was fed at a ratio (Total gas flow rate : catalyst volume) GHSV = 50,300 h⁻¹, gradual heating of the gases inside the reactor resulted in a progressive decrease of the N₂O concentration at the reactor outlet, equivalent to N₂O conversion values of 25% at 250°C, 75% at 280°C and 98% at temperatures above 340°C.

When a sample of the material obtained according to example 1 was introduced into a tubular reactor and a gas stream of Ar with a concentration of N₂O equal to 1400 ppm, [O₂] = 3% v/v and H₂O = 0.5% v/v was fed at a ratio (Total gas flow : catalyst volume) GHSV = 50,300 h⁻¹, gradual heating of the gases inside the reactor resulted in a progressive decrease of the N₂O concentration at the reactor outlet, equivalent to N₂O conversion values of 17 % at 260 °C, 42 % at 275 °C, 73 % at 290 °C, 94% at 315 °C and 97 % at temperatures above 350 °C.

When a sample of the material obtained according to example 1 was introduced into a tubular reactor and a stream of Ar gas was fed, with a concentration of N₂O equal to 1400 ppm, [O₂] = 3% v/v and H₂O = 0.5% v/v, at a ratio (Total gas flow : catalyst volume) GHSV = 50,300 h⁻¹, keeping the reaction temperature equal to 360°C, an initial N₂O conversion of 93% was obtained, experiencing a slight increase in conversion to 96% over 65 hours in reaction.

### Example 3

14.84 grams of cobalt nitrate (Co(NO₃)₂.6H₂O) were dissolved in 100 ml of water and the solution was kept under stirring. 100 ml of a solution of caesium carbonate (Cs₂CO₃) at 30% w/w was prepared. This solution was poured into a burette. The carbonate solution was slowly added and maintained until the pH reached was 9. The total volume of carbonate added was 57.5 ml. The solid was filtered off and washed with 220 ml of water at 15 °C. It was dried at 100 °C for 16 h and calcined at 400 °C for 2 h to obtain a material with the formula Co₃O_{3.83}Cs₀.₁₅.

### Example 4

When a sample of the material obtained according to example 3 was introduced into a tubular reactor and a gas stream of Ar with a concentration of N₂O equivalent to 1400 ppm, [O₂] = 3% v/v and H₂O = 0.5% v/v was fed at a ratio (Total gas flow : catalyst volume) GHSV = 50,300 h⁻¹, gradual heating of the gases inside the reactor resulted in a progressive decrease of the N₂O concentration at the reactor outlet equivalent to N₂O conversion values of 50 % at 280 °C, 80 % at 300 °C, 93 % at 320 °C and 97 % at temperatures above 340 °C.

### Example 5

59.36 grams of cobalt nitrate (Co(NO₃)₂.6H₂O) were dissolved in 400 ml of water and the solution was kept under stirring. 400 ml of a solution of caesium carbonate (Cs₂CO₃) at 30% *w*/*w* was prepared. This solution was poured into a burette. The carbonate solution was slowly added and maintained until the pH reached was 9. The total volume of carbonate added was 207 ml. The solid was filtered off and washed with 1160 ml of water at 15 °C. It was dried at 100 °C for 16 h and calcined at 400 °C for 2 h to obtain a material with the formula Co₃O_{3.83}Cs_{0.06}.

### Example 6

When a sample of the material obtained according to example 5 was introduced into a tubular reactor and a gas stream of Ar with a concentration of N₂O equivalent to 1400 ppm, [O₂] = 3% v/v and H₂O = 0.5% v/v was fed at a ratio (Total gas flow : catalyst volume) GHSV = 24,000 h⁻¹, gradual heating of the gases inside the reactor resulted in a progressive decrease of the N₂O concentration at the reactor outlet equivalent to N₂O conversion values of 47 % at 250 °C, 88 % at 280 °C, 95 % at 300 °C and 99 % at temperatures above 320 °C.

### Example 7

14.84 grams of cobalt nitrate (Co(NO₃)₂.6H₂O) were dissolved in 100 ml of water and the solution was kept under stirring. 100 ml of a solution of potassium carbonate (K₂CO₃) at 15 % w/w was prepared, placed in a burette and the potassium carbonate solution was slowly added to the cobalt nitrate solution and the addition of carbonate was continued until the pH reached was 9. The total volume of carbonate added was 54 ml. The solid was filtered off and washed with 400 ml of water at 15°C. It was dried at 100 °C for 16 h and calcined at 400 °C for 2 h, obtaining a K-free material with the formula Co₃O₄.

### Example 8

When a sample of the material obtained according to example 7 was introduced into a tubular reactor and an Ar gas stream with an N₂O concentration equivalent to 1400 ppm was fed at a ratio (Gas flow rate : catalyst volume) GHSV = 50,300 h⁻¹, gradual heating of the gases inside the reactor resulted in a progressive decrease of the N₂O concentration at the reactor outlet, equivalent to N₂O conversion values of 9 % at 280 °C, 20 % at 320 °C, 34 % at 360 °C and 44 % at 380 °C. A decrease in N₂O conversion due to the absence of the alkaline element was observed throughout the range of temperature tested.

### Example 9

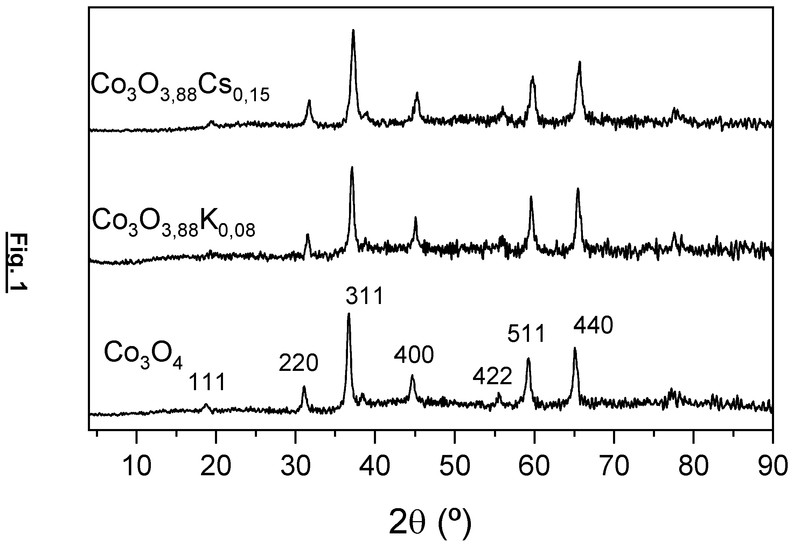

X-ray diffractograms (XRD) of the materials described in examples 1 and 3 show that these materials have a cubic structure close to that of the Co₃O₄ spinel described in example 7 (JCPDS 00-042-1467) (Figure 1). The average crystallite size was calculated according to the Scherrer equation respectively obtaining values around 18 nm and 10 nm.

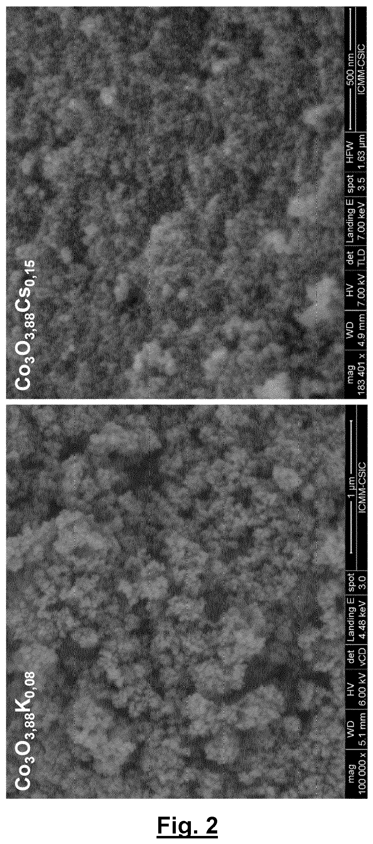

Scanning Electron Microscopy micrographs of these materials (Figure 2) showed an average primary particle size between 10 and 20 nm for example 1 and 8-15 nm for example 3.

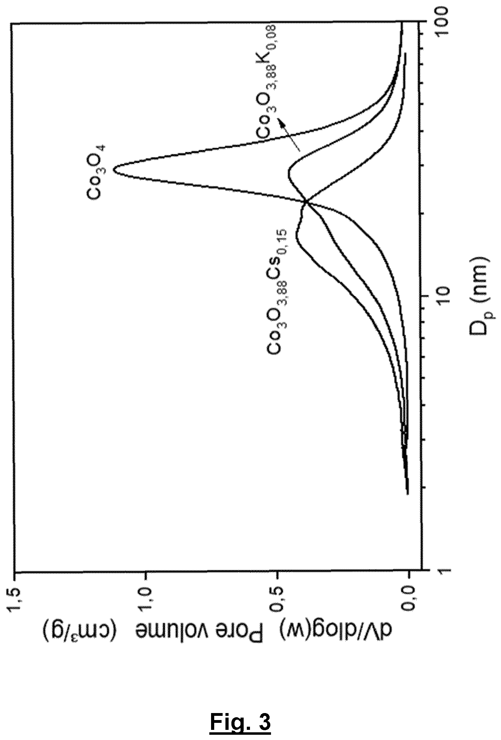

These microphotographs show the general surface appearance of the materials, formed by agglomerates of primary particles with sizes similar to those obtained for crystallite sizes by XRD, and with pores whose diameter falls within the range of mesoporous materials (2-50 nm), as determined by N₂ adsorption-desorption isotherms (Figure 3).

### Example 10

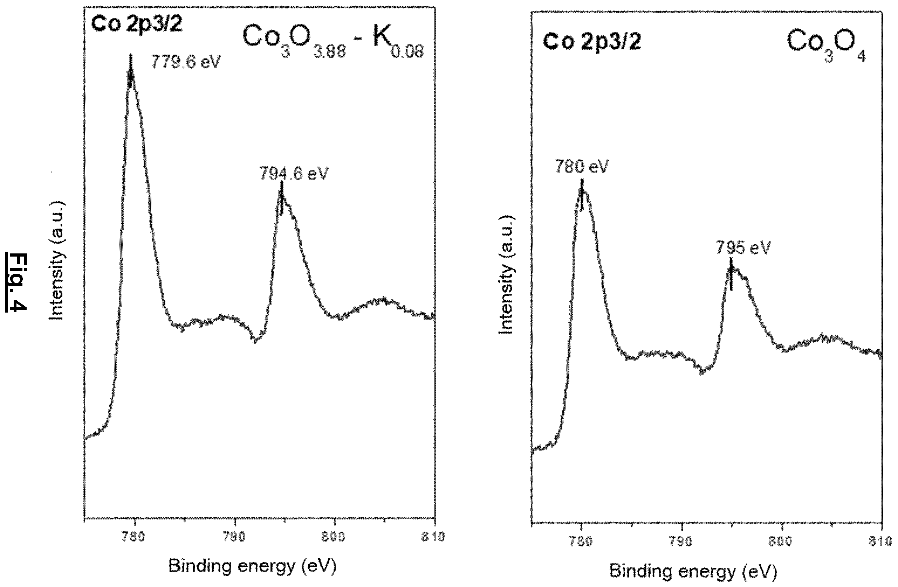

The samples of the materials described in examples 1 and 7 were analysed by X-ray photoelectron spectroscopy (XPS) showing a shift of the Co 2p level in the sample Co₃O_{3.88}K_{0.08} (example 1) towards lower binding energies with respect to the sample without K (example 7) which is explained by the increase in the proportion of Co(II) (CoO) species that are stabilised by the electron donation effect promoted by the presence of K⁺ ions (figure 4).

According to these results, the material obtained following the procedure described in the invention is clearly different, as regards its redox properties, with respect to those previously described.

### Example 11

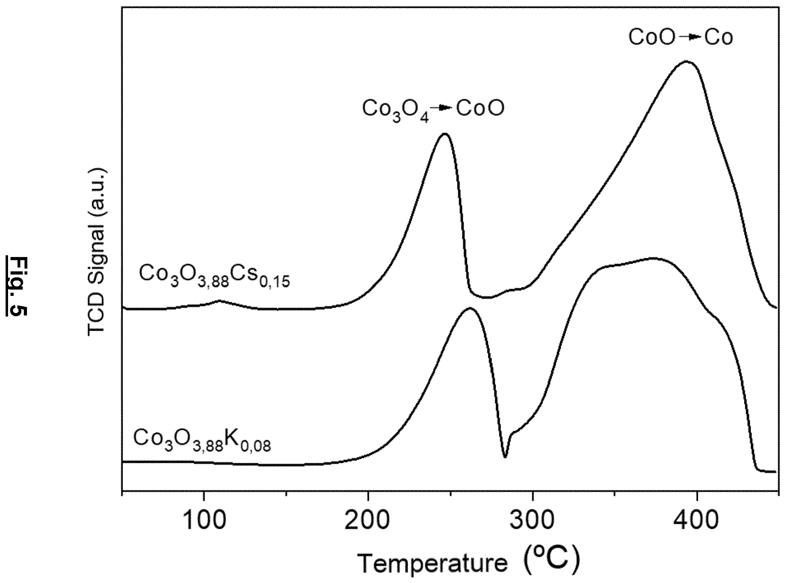

Programmed temperature reduction experiments were performed on the materials described in examples 1 and 3, detecting a shift of the first reduction peak towards lower temperatures (246 and 262 °C respectively for Co₃O_{3.88}K_{0.08} and Co₃O_{3.88}Cs_{0.15}) compared to those reported in the state of the art for conventional spinel (Figure 5). From these results, the Co²⁺/Co³⁺ ratio was calculated, obtaining a value higher than the stoichiometric value (0.7 versus 0.5). This increase in the ratio of Co(II) with respect to Co(III) in the spinel lattice leads to the appearance of a certain proportion of oxygen vacancies, which give the surface of the material special properties for adsorbing and activating the N₂O molecule. This changes the stoichiometry of the spinel, making it oxygen deficient.

According to these results, the material obtained following the procedure described in the invention is clearly different, as regards its redox properties, with respect to those previously described.

### Example 12

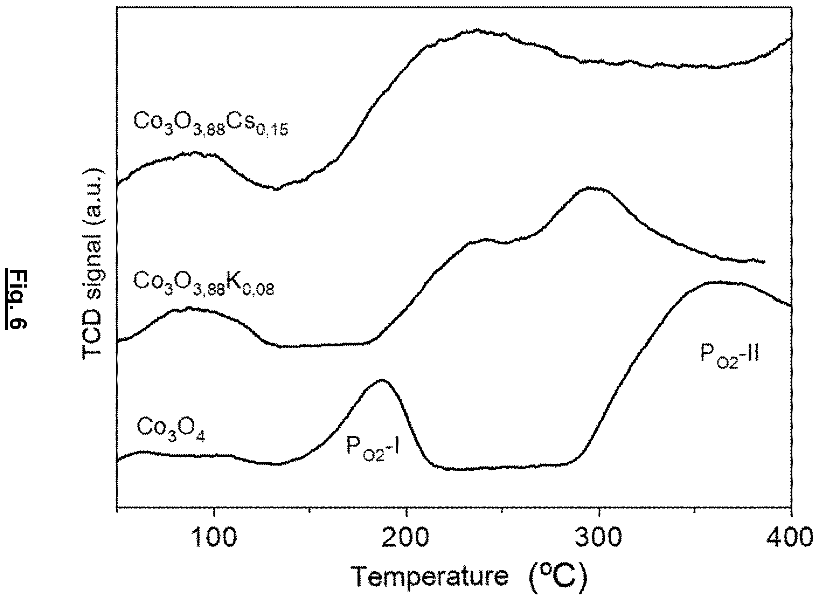

O₂ temperature-programmed desorption (O₂-TPD) experiments were performed with the materials described in examples 1, 3 and 7. In the materials whose washing was controlled (examples 1 and 3), the peak relative to surface oxygen (P_{O2}-I) appeared at temperatures around 100 °C (figure 6), compared to 190 °C for the material without K (example 7).

Furthermore, the peak relative to the lattice oxygen (P_{O2}-II) shifted to lower temperatures (180 - 350 °C) whereas in the K-free spinel this peak appeared from 300 °C onwards.

Based on these results, it can be concluded that the materials covered by this patent are clearly different in terms of their O₂ adsorption/desorption capacity.

The most accepted mechanism for the N₂O decomposition reaction is through adsorption of N₂O on an active centre [A], releasing N₂ and leaving an O atom adsorbed on that centre. A second N₂O molecule is adsorbed on this centre, giving rise to another N₂ molecule. The two adsorbed O atoms must recombine to form molecular O₂, this being the limiting stage of the reaction:

N₂O _{(g)} + [A] → N_{2 (g)} + [O⁻ - A]

[O⁻ - A] + N₂O _{(g)} → N_{2 (g)} + O_{2 (g)} + [A]

The O₂ DTP results obtained show that the samples described in examples 1 and 3 have the ability to perform the O₂ desorption processes from the lattice oxygen (P_{O2}-II) at a temperature (200 - 300°C) significantly lower than that required by the sample with conventional spinel structure (> 300°C). This can be considered to be related to the lowering of the temperature required by these new catalysts to carry out the N₂O decomposition process under the indicated conditions.

### Example 13

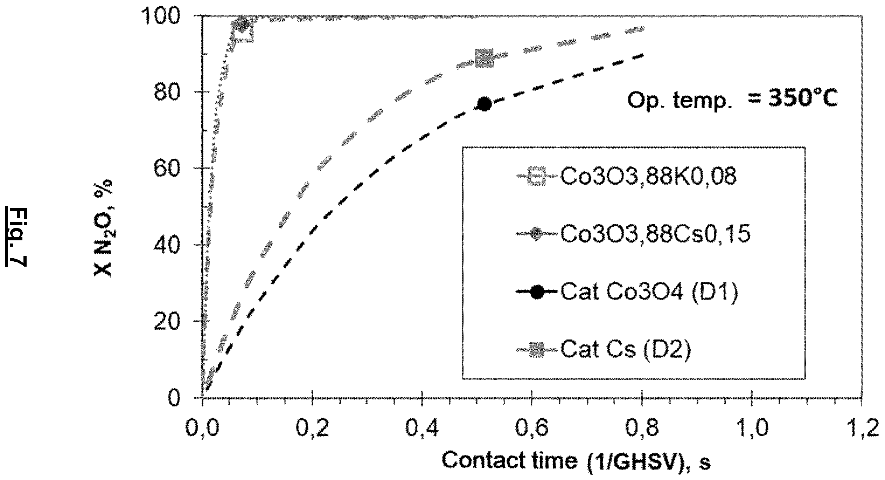

A comparison is made of the data obtained from the catalyst obtained according to example 1 of the present invention against the data described in the prior art documents, "D1" [Li Xue, Changbin Zhang, Hong He, Yasutake Teraoka, Applied Catalysis B: Environmental, Volume 75, Issues 3-4, 2007, Pages 167-174, figure 8], where, for instance, at 350 °C, it is possible to observe that the conversion obtained with this catalyst, under conditions of humidity and the presence of O₂, is close to 77%, compared to the 96% conversion obtained with the Co₃O_{3.88}K_{0.08} material. To compare these results, the data have been analysed as a function of the space velocity (GHSV) at which the different experiments have been carried out. Figure 7 shows the results of N₂O conversion under conditions of humidity and in the presence of O₂ for the mentioned catalysts as a function of space time or contact time, i.e. considering the volume of the catalyst and the flow rate used in each experiment (T= V_{cat}/F = 1/GHSV). This comparison highlights the great improvement in the catalytic activity of this material compared to the state of the art since a shorter contact time (lower volume of catalyst) is needed to achieve similar or higher conversions.

The following table shows the values of the reaction constant at 350°C, K_{350°C}, calculated considering that the reaction runs according to a first-order kinetics, which would be the best quantitative expression of the catalytic activity.

**Table 1. Values of the reaction constant of the catalysts.**

| **Catalyst** | **1st order eq.** |
|---|---|
| | **K _{350°C} (s⁻¹)** |
| **Co₃O_{3.88}K_{0.08}** | **45.0** |
| **Cat Co₃O₄ (D1)** | **2.9** |

According to these data, the increase in reaction rate produced by the catalysts covered by the patent is more than an order of magnitude greater than the best described in the article mentioned in this example.

On the other hand, the catalyst described in this article, D1, as Co₃O₄ , showed a binding energy of the Co 2p 3/2 component of 780.1 eV similar to the K-free spinel described in example 7 (Figure 3), and the desorption of the lattice oxygen obtained by O₂ DTP takes place, as with the K-free spinel described in example 7, at 300°C and above (Figure 5).

### Example 14

The material obtained according to example 1 and according to example 3 of the present invention and the data shown in the prior art document, "D2" [Pawet Stelmachowski, Gabriela Maniak, Andrzej Kotarba, Zbigniew Sojka, Catalysis Communications, Volume 10, Issue 7, 2009, Pages 1062-1065, Figure 7] are compared. It can be seen from Figure 7 of "D2" that under humid conditions (option b) the Cs-doped catalyst achieves a conversion value close to 90 % at 350 °C. The K-doped catalyst is significantly less active, since at this temperature the estimated conversion in this curve is close to 50%, while the conversion of the materials in examples 1 and 5 is respectively 96 and 98%, using a much smaller volume of catalyst (shorter contact time).

Furthermore, the following table shows the values of the reaction constant at 350 °C, K_{350°C}, calculated considering that the reaction runs according to a first-order kinetics, which would be the best quantitative expression of the catalytic activity.

**Table 2. Values of the reaction constant of the catalysts.**

| **Catalyst** | **1st order eq.** |
|---|---|
| | **K _{350°C} (s⁻¹)** |
| **Co₃O_{3.88}K_{0.08}** | **45.0** |
| **Co₃O_{3.88}Cs_{0.15}** | **49.0** |
| **Cat Cs (D2)** | **4.3** |

According to these data, the increase in reaction rate produced by the materials covered by the patent is more than an order of magnitude greater than the best described in the article mentioned in this example.

## Claims

1. A material **characterised in that** it has a non-stoichiometric spinel-type crystal structure with the general formula Co₃O_{4-x/2}A_{y}, wherein:
x has a value between 0.02 and 0.3
A is an alkali element, and
y has a value of between 0.06 and 0.18
with an A/Co ratio between 0.02 and 0.06; a Co²⁺/Co³⁺ ratio between 0.55 and 0.80; and a primary particle size - determined by Scanning Electron Microscopy - equivalent to the crystallite size between 5 and 30 nm.

2. The material according to claim 1, wherein the material has a specific surface area BET of between 40 m²/g and 80 m²/g.

3. The material according to any one of claims 1 or 2, wherein the material has a pore volume - determined by N₂ adsorption-desorption isotherms - of between 0.2 cm³/g and 0.4 cm³/g.

4. The material according to any one of claims 1 to 3, wherein the material is mesoporous.

5. The material according to any one of claims 1 to 4, wherein the alkali element A is K, x is 0.182, and y is 0.09.

6. The material according to any one of claims 1 to 4, wherein the alkali element A is Cs, x is 0.235, and y is 0.15.

7. A process for obtaining the material according to claims 1 to 6, **characterised in that** it comprises the following steps:
a) dissolving a cobalt salt in water;
b) dissolving an alkali metal salt or hydroxide in water;
c) slowly adding the solution obtained in step (b) to the solution prepared in step (a) until a pH of between 8 and 11 is reached;
d) filtering the solid obtained in step (c) and washing it with 5 ml to 75 ml of water for each gram of cobalt salt added in step (a);
e) drying the solid obtained in step (d) at a temperature between 50 °C and 200 °C for a time between 12 h and 20 h; and
f) calcining the solid obtained in step (e) at a temperature between 200 °C and 700 °C in an air atmosphere for at least 30 min.

8. The process according to claim 7, wherein the cobalt salt in step (a) is selected from cobalt nitrate hexahydrate, cobalt sulphate, cobalt chloride and cobalt acetate.

9. The process according to any one of claims 7 or 8, wherein the alkali metal salt or hydroxide in step (b) is selected from alkali metal carbonate, alkali metal nitrate, alkali metal hydroxide and alkali metal acetate.

10. The process according to claim 9, wherein if the cobalt salt is cobalt nitrate hexahydrate and the alkali metal salt is alkali metal carbonate, the washing of step (d) is with an amount of water between 16 ml/g and 21 ml/g of cobalt nitrate hexahydrate.

11. Use of the material according to any one of claims 1 to 6 as a catalyst.

12. Use of the material according to claim 11 as a catalyst in the oxidation/decomposition of gases.

13. Use of the material according to claim 11 as a catalyst for the decomposition of N₂O.

## Patentansprüche

1. Material, **dadurch gekennzeichnet, dass** es eine nichtstöchiometrische Kristallstruktur vom Spinelltyp mit der allgemeinen Formel Co₃O_{4-x/2}A_{y} aufweist, wobei:
x einen Wert zwischen 0,02 und 0,3 aufweist,
A ein Alkalimetallelement ist und
y einen Wert zwischen 0,06 und 0,18 aufweist,
mit einem A/Co-Verhältnis zwischen 0,02 und 0,06; einem Co²⁺/Co³⁺-Verhältnis zwischen 0,55 und 0,80; und einer Primärpartikelgröße - bestimmt durch Rasterelektronenmikroskopie - entsprechend der Kristallitgröße zwischen 5 und 30 nm.

2. Material nach Anspruch 1, wobei das Material eine spezifische BET-Oberfläche zwischen 40 m²/g und 80 m²/g aufweist.

3. Material nach einem der Ansprüche 1 oder 2, wobei das Material ein Porenvolumen - bestimmt durch N2-Adsorptions-Desorptions-Isothermen - zwischen 0,2 cm³/g und 0,4 cm³/g aufweist.

4. Material nach einem der Ansprüche 1 bis 3, wobei das Material mesoporös ist.

5. Material nach einem der Ansprüche 1 bis 4, wobei das Alkalimetallelement A K ist, x 0,182 ist und y 0,09 ist.

6. Material nach einem der Ansprüche 1 bis 4, wobei das Alkalimetallelement A Cs ist, x 0,235 ist und y 0,15 ist.

7. Verfahren zur Gewinnung des Materials nach den Ansprüchen 1 bis 6, **dadurch gekennzeichnet, dass** es die folgenden Schritte umfasst:
a) Lösen eines Kobaltsalzes in Wasser;
b) Lösen eines Alkalimetallsalzes oder -hydroxids in Wasser;
c) langsames Zugeben der in Schritt (b) erhaltenen Lösung zu der in Schritt (a) hergestellten Lösung, bis ein pH-Wert zwischen 8 und 11 erreicht ist;
d) Filtern des in Schritt (c) erhaltenen Feststoffs und Waschen desselben mit 5 ml bis 75 ml Wasser für jedes Gramm Kobaltsalz, das in Schritt (a) zugegeben wurde;
e) Trocknen des in Schritt (d) erhaltenen Feststoffs bei einer Temperatur zwischen 50 °C und 200 °C für eine Zeit zwischen 12 und 20 Stunden; und
f) Kalzinieren des in Schritt (e) erhaltenen Feststoffs bei einer Temperatur zwischen 200 °C und 700 °C in einer Luftatmosphäre für mindestens 30 min.

8. Verfahren nach Anspruch 7, wobei das Kobaltsalz in Schritt (a) ausgewählt ist aus Kobaltnitrat-Hexahydrat, Kobaltsulfat, Kobaltchlorid und Kobaltacetat.

9. Verfahren nach einem der Ansprüche 7 oder 8, wobei das Alkalimetallsalz oder -hydroxid in Schritt (b) ausgewählt ist aus Alkalimetallcarbonat, Alkalimetallnitrat, Alkalimetallhydroxid und Alkalimetallacetat.

10. Verfahren nach Anspruch 9, wobei, wenn das Kobaltsalz Kobaltnitrat-Hexahydrat und das Alkalimetallsalz Alkalimetallcarbonat ist, das Waschen von Schritt (d) mit einer Wassermenge zwischen 16 ml/g und 21 ml/g Kobaltnitrat-Hexahydrat erfolgt.

11. Verwendung des Materials nach einem der Ansprüche 1 bis 6 als Katalysator.

12. Verwendung des Materials nach Anspruch 11 als Katalysator bei der Oxidation/Zersetzung von Gasen.

13. Verwendung des Materials nach Anspruch 11 als Katalysator für die Zersetzung von N₂O.

## Revendications

1. Matériau **caractérisé en ce qu'**il présente une structure cristalline de type spinel nonstœchiométrique de la formule générale Co₃O_{4-x/2}A_{y}, selon lequel :
x présente une valeur comprise entre 0,02 et 0,3
A est un élément alcalin, et
y présente une valeur comprise entre 0,06 et 0,18
et un rapport A/Co compris entre 0,02 et 0,06 ; un rapport Co²⁺/Co³⁺ compris entre 0,55 et 0,80 ; et une taille de particule primaire - établie par de la Microscopie Électronique à Balayage - équivalente à la taille des cristallites comprise entre 5 et 30 nm.

2. Matériau selon la revendication 1, selon lequel le matériau présente une surface spécifique BET comprise entre 40 m2/g et 80 m2/g.

3. Matériau selon l'une quelconque des revendications 1 ou 2, selon lequel le matériau présente un volume de pore - établi par de le biais d'isothermes d'adsorption / de désorption de N2 - compris entre 0,2 cm³/g et 0,4 cm³/g.

4. Matériau selon l'une quelconque des revendications 1 à 3, selon lequel le matériau est mésoporeux.

5. Matériau selon l'une quelconque des revendications 1 à 4, selon lequel l'élément alcalin A est le K, x est 0,182, et y est 0,09.

6. Matériau selon l'une quelconque des revendications 1 à 4, selon lequel l'élément alcalin A est le Cs, x est 0,235, et y est 0,15.

7. Procédé d'obtention d'un matériau selon les revendications 1 à 6, **caractérisé en ce qu'**il comprend les étapes suivantes :
a) la dissolution d'un sel de cobalt dans de l'eau ;
b) la dissolution d'un sel de métal alcalin ou de l'hydroxyde dans de l'eau ;
c) l'ajout lent de la solution obtenue à l'étape (b) à la solution préparée selon l'étape (a) jusqu'à l'obtention d'un pH compris entre 8 et 11 ;
d) le filtrage du solide obtenu à l'étape (c) et lavage de celui-ci par 5 ml à 75 ml d'eau pour chaque gramme de sel de cobalt ajouté à l'étape (a) ;
e) le séchage du solide obtenu à l'étape (d) à une température comprise entre 50 °C et 200 °C pendant un laps de temps compris entre 12 h et 20 h ; et
f) la calcination du solide obtenu à l'étape (e) à une température comprise entre 200 °C et 700 °C sous atmosphère d'air pendant au moins 30 minutes.

8. Procédé selon la revendication 7, selon lequel le sel de cobalt lors de l'étape (a) est choisi parmi le nitrate de cobalt hexahydraté, le sulfate de cobalt, le chlorure de cobalt et l'acétate de cobalt.

9. Procédé selon l'une quelconque des revendications 7 ou 8, selon lequel le sel métallique alcalin ou hydroxyde lors de l'étape (b) est choisi parmi le carbonate de métal alcalin, le nitrate de métal alcalin, l'hydroxyde de métal alcalin métallique et l'acétate de métal alcalin.

10. Procédé selon la revendication 9, selon lequel si le sel de cobalt est du nitrate de cobalt hexahydraté et le sel de métal alcalin est un carbonate de métal alcalin, l'étape de lavage selon l'étape (d) s'effectue avec une quantité d'eau comprise entre 16 ml/g et 21 ml/g de nitrate de cobalt hexahydraté.

11. Utilisation d'un matériau selon l'une quelconque des revendications 1 à 6 en tant que catalyseur.

12. Utilisation d'un matériau selon la revendication 11 en tant que catalyseur lors de l'oxydation / de la décomposition de gaz.

13. Utilisation du matériau selon la revendication 11 en tant que catalyseur lors de la décomposition de N₂O.
